# EUROPÄISCHE PATENTANMELDUNG

(11) **EP 4 026 685 A1**
(43) Veröffentlichungstag der Anmeldung: **13.07.2022**
(21) Anmeldenummer: 21212429.1
(22) Anmeldetag: 06.12.2021
(51) Int. Cl.: B29C 65/60, B29C 65/08

(54) **WERKZEUG**

(30) Priorität: 11.01.2021 DE 102021100302
(71) Anmelder: MS Ultraschall Technologie GmbH, 78549 Spaichingen (DE)
(72) Erfinder: RUNGAS, Udo, 78549 Spaichingen (DE)
(74) Vertreter: Manitz Finsterwald Patent- und Rechtsanwaltspartnerschaft mbB

(57) **Zusammenfassung**

Ein Werkzeug zum thermoplastischen Umformen eines Nietzapfens umfasst einen Grundkörper (10) mit einer zentralen Längsachse (A). Im Zentrum eines kuppelförmigen Hohlraums (12) ist zumindest eine Schneide (24, 26) vorgesehen.

## Beschreibung

Die vorliegende Erfindung betrifft ein Werkzeug zum thermoplastischen Umformen eines Nietdoms, wobei das Werkzeug einen Grundkörper mit einer zentralen Längsachse umfasst, der einen kuppelförmigen Hohlraum ausbildet. Ein solches Werkzeug ist beispielsweise aus der DE 10 2008 011 151 A1 bekannt und wird zum Umformen von thermoplastischen Nietzapfen verwendet. Ein solches Werkzeug kann insbesondere mit einer Sonotrode eingesetzt werden, um durch Ultraschallschwingungen den Nietzapfen zu erwärmen, dadurch aufzuschmelzen und in eine pilzförmige Form zu einem Nietkopf umzuformen, um eine Fügeverbindung herzustellen. Durch den kuppelförmigen Hohlraum ist an dem Werkzeug eine Kalotte ausgebildet, die zur Formgebung des plastifizierten Nietmaterials dient, wobei ein Zapfen im Zentrum des Hohlraums dazu dienen kann, das plastifizierte Material des Nietzapfens in den kuppelförmigen Hohlraum zu drücken.

Auch wenn sich das beschriebene Fügeverfahren weitgehend bewährt hat, kann es in bestimmten Anwendungsfällen auf derjenigen Seite eines Werkstücks, die dem Nietzapfen abgewandt ist, zu Abdrücken kommen, d.h. zu muldenförmigen Vertiefungen auf der Sichtseite des Werkstücks.

Es ist deshalb die Aufgabe der vorliegenden Erfindung, ein Werkzeug nach dem Oberbegriff des Anspruchs 1 derart weiterzubilden, dass die von dem Werkzeug erzeugte Fügeverbindung auf der Sichtseite keine Beeinträchtigung aufweist, ohne dabei die erforderliche Festigkeit der Verbindung zu verringern.

Die Lösung dieser Aufgabe erfolgt durch die Merkmale des Anspruchs 1 und insbesondere dadurch, dass in dem Hohlraum zumindest eine Schneide ausgebildet ist, die sich quer zur Längsachse erstreckt.

Mit der erfindungsgemäßen Schneide wird nach dem Plastifizieren des Nietzapfens, der als Hohlniet, Vollniet oder auch als Nietsteg ausgebildet sein kann, aus diesem nach wie vor ein Wulst geformt. Allerdings ist der hierbei entstehende Nietdom aufgrund der Schneide geschlitzt ausgebildet, was erstaunlicherweise ohne Reduzierung der Haltekräfte zu einer einwandfreien Oberfläche auf der Sichtseite führt.

Vorteilhafte Ausführungsformen der Erfindung sind in der Beschreibung, der Zeichnung sowie den Unteransprüchen beschrieben.

Nach einer ersten vorteilhaften Ausführungsform kann die Schneide in dem Hohlraum eine radiale Trennwand bilden. Hierdurch wird in dem entstehenden Nietkopf ein durchgehender radialer Schnitt gebildet, was das Fügeergebnis begünstigt.

Nach einer weiteren vorteilhaften Ausführungsform können in dem Hohlraum zwei oder mehr Schneiden vorgesehen sein, die symmetrisch zur Längsachse angeordnet sind, wobei insbesondere zwei Schneiden in einer Ebene angeordnet sein können, die durch die Längsachse verläuft. Eine solche symmetrische Ausbildung von Schneiden bzw. Schnitten in dem erzeugten Nietkopf hat sich als besonders vorteilhaft erwiesen.

Nach einer weiteren vorteilhaften Ausführungsform kann die Schneide einen insbesondere messerartig ausgebildeten Klingenkörper und eine verbreiterte Basis aufweisen. Hierdurch wird dafür gesorgt, dass im Bereich des im Nietkopf erzeugten Schlitzes ein spannungsfreier Übergang zwischen dem Schlitz und den benachbarten Teilen des Ringwulstes des Nietkopfes gewährleistet ist.

Das erfindungsgemäße Werkzeug eignet sich sowohl für zylindrische wie auch für hohlzylindrische Nietzapfen und es kann auch zum Umformen von Nietstegen oder Nietrippen ausgebildet sein, wobei der kuppelförmige Hohlraum zur Umformung von Nietstegen oder Nietrippen eine Quererstreckung rechtwinklig zur zentralen Längsachse aufweisen kann. Um bei der Verwendung von hohlzylindrischen Nietzapfen einen den Ringwulst in radialer Richtung vollständig durchtrennenden Schnitt bzw. Schlitz zu erzielen, kann es vorteilhaft sein, wenn sich die Schneide in radialer Richtung von dem Zapfen bis zu einer Umfangswand des Hohlraums erstreckt.

Nach einer weiteren vorteilhaften Ausführungsform kann im Inneren des Hohlraums in Zapfen vorgesehen sein, der in Axialrichtung über die Schneide vorsteht. Hierdurch wird erreicht, dass sich der durch die Schneide ausgebildete Schlitz nicht vollständig bis zum Boden des Ringwulstes erstreckt, wodurch die gewünschte Stabilität ohne optische Beeinträchtigung erzielt wird.

Nach einer weiteren vorteilhaften Ausführungsform kann der Hohlraum innerhalb des Grundkörpers torusförmig oder kuppelförmig ausgebildet sein oder auch eine Quererstreckung senkrecht zur Längsrichtung aufweisen. Es sind jedoch auch andere geometrische Ausbildungen möglich.

Nach einem weiteren Aspekt der vorliegenden Erfindung betrifft diese auch eine Sonotrode mit einem Werkzeug der vorstehend beschriebenen Art.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Ansicht eines Werkzeugs zum thermo-plastischen Umformen eines Nietzapfens;
- Fig. 2: eine Draufsicht auf die Vorderseite des Werkzeugs von Fig. 1; und
- Fig. 3: eine perspektivische Ansicht einer Sonotrode mit dem Werkzeug von Fig.1 und Fig. 2.

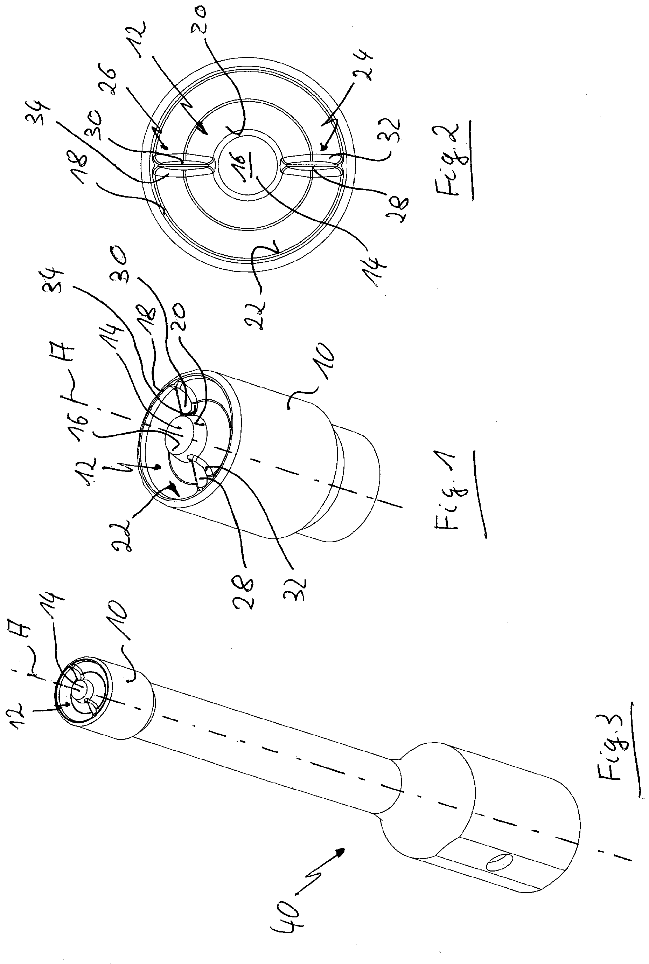

Das in Fig. 1 gezeigte Werkzeug zum thermoplastischen Umformen eines Nietzapfens umfasst einen grundsätzlich zylinderförmig ausgebildeten Grundkörper 10 mit einer zentralen Längsachse A, wobei der Grundkörper 10 an seiner vorderen Stirnseite einen kuppelförmigen Hohlraum 12 ausbildet, in dessen Zentrum bei dem dargestellten Ausführungsbeispiel ein Zapfen 14 vorgesehen ist.

Beim dargestellten Ausführungsbeispiel ist der Zapfen 14 leicht konisch geformt und weist eine abgeflachte Stirnfläche 16 auf. Der Zapfen 14, wie auch der kuppelförmige Hohlraum 12 sind beide konzentrisch zur Längsachse A ausgebildet, so dass sich ein grundsätzlich torusförmiger Hohlraum 12 ergibt, der radial innen durch eine von dem Zapfen 14 gebildete Mantelfläche 20 und radial außen durch eine von dem Grundkörper 10 gebildete Umfangswand 22 gebildet ist, die einen äußeren Umfangsrand 18 aufweist.

Beim dargestellten Ausführungsbeispiel weist das Werkzeug weiterhin zwei gleichartig ausgebildete Schneiden 24 und 26 auf, die in dem Hohlraum 12 angeordnet sind und diesen in zwei gleich große Hälften teilen. Die beiden Schneiden 24 und 26 erstrecken sich quer zur Längsachse A und verlaufen in einer Ebene, die durch die Längsachse A verläuft. Hierdurch sind die beiden Schneiden 24 und 26 symmetrisch zur Längsachse A angeordnet.

Wie Fig. 1 und Fig. 2 gut erkennen lassen, weisen beide Schneiden 24 und 26 einen dünnwandigen Klingenkörper 28, 30 auf, der sich in Form eines Messerblatts quer durch den Hohlraum 12 erstreckt. Jeder Klingenkörper 28 und 30 ist auf einer verbreiterten Basis 32, 34 angeordnet, wobei sich die Basis 32, 34 (aufgrund der torusförmigen Ausbildung des Hohlraums) als ringwulstförmiger Abschnitt von der Umfangswand 20 des Zapfens 14 bis zur Umfangswand 22 des Grundkörpers 10 erstreckt.

Die beiden Schneiden 24 und 26 bilden somit jeweils eine radiale Trennwand im Inneren des torusförmigen Hohlraums 12, wobei sich diese Trennwand bei dem dargestellten Ausführungsbeispiel zwar bis zum vorderen Ende des Grundkörpers 10 jedoch nicht bis zur vorderen Stirnfläche 16 des Zapfens 14 erstreckt. Somit steht der Zapfen 14 in Axialrichtung nach vorne über die beiden Schneiden 24 und 26 vor.

Fig. 3 zeigt eine Sonotrode 40, an deren vorderem Ende das Werkzeug der Fig. 1 und Fig. 2 befestigt ist. Die Sonotrode 40 weist einen üblichen Aufbau auf und erstreckt sich koaxial zur Längsachse A.

Es sei darauf hingewiesen, dass die Anordnung und Anzahl der Schneiden 24 und 26 sowie die Ausbildung des Zapfens 14 und des Hohlraums 12 nur rein beispielhaft ist. So könnte der Zapfen 14 beispielsweise auch nach Art eines Spitzkegels ausgebildet sein oder es könnte eine unterschiedliche Anzahl an Schneiden vorgesehen sein.

## Patentansprüche

1. Werkzeug zum thermoplastischen Umformen eines Nietzapfens, umfassend einen Grundkörper (10) mit einer zentralen Längsachse (A), der einen kuppelförmigen Hohlraum (12) ausbildet,
**dadurch gekennzeichnet,**
**dass** in dem Hohlraum (12) zumindest eine Schneide (24, 26) ausgebildet ist, die sich quer zur Längsachse (A) erstreckt.

2. Werkzeug nach Anspruch 1,
**dadurch gekennzeichnet,**
**dass** die Schneide (24, 26) in dem Hohlraum (12) eine radiale Trennwand bildet.

3. Werkzeug nach Anspruch 1 oder 2,
**dadurch gekennzeichnet,**
**dass** in dem Hohlraum (12) zwei Schneiden (24, 26) vorgesehen sind.

4. Werkzeug nach einem der vorstehenden Ansprüche,
**dadurch gekennzeichnet,**
**dass** in dem Hohlraum (12) mehrere Schneiden (24, 26) symmetrisch zur Längsachse (A) angeordnet sind, wobei insbesondere zwei Schneiden (24, 26) in einer Ebene angeordnet sind, die durch die Längsachse (A) verläuft.

5. Werkzeug nach einem der vorstehenden Ansprüche,
**dadurch gekennzeichnet,**
**dass** die Schneide (24, 26) einen Klingenkörper (28, 30) und eine verbreiterte Basis (32, 34) aufweist.

6. Werkzeug nach einem der vorstehenden Ansprüche,
**dadurch gekennzeichnet,**
**dass** in dem Hohlraum ein Zapfen (14) vorgesehen ist und sich die Schneide (24, 26) in radialer Richtung von dem Zapfen (14) bis zu einer Umfangswand (22) des Hohlraums (12) erstreckt.

7. Werkzeug nach einem der vorstehenden Ansprüche,
**dadurch gekennzeichnet,**
**dass** in dem Hohlraum ein Zapfen (14) vorgesehen ist und der Zapfen (14) in Axialrichtung über die Schneide (24, 26) vorsteht.

8. Werkzeug nach einem der vorstehenden Ansprüche,
**dadurch gekennzeichnet,**
**dass** in dem Hohlraum ein Zapfen (14) vorgesehen ist und der Zapfen (14) konzentrisch zur Längsachse (A) ausgebildet ist.

9. Werkzeug nach einem der vorstehenden Ansprüche,
**dadurch gekennzeichnet,**
**dass** der Hohlraum (12) torusförmig ist.

10. Sonotrode (40) mit einem Werkzeug nach zumindest einem der vorstehenden Ansprüche.
